# EUROPEAN PATENT APPLICATION

(11) **EP 2 790 174 A1**
(43) Date of publication of application: **15.10.2014**
(21) Application number: 14162223.3
(22) Date of filing: 28.03.2014
(51) Int. Cl.: G09G 3/36, G02F 1/1343

(54) **Liquid crystal display**

(30) Priority: 01.04.2013 KR 20130035288
(71) Applicant: Samsung Display Co., Ltd., Gyeonggi-Do (KR)
(72) Inventor: Hong, Hyun Seok, 204-3303 Chungcheongnam-do (KR); Lee, Hyo-Chul, 114-1404 Chungcheongnam-do (KR); Na, Yeon-Sun, 705-1005 Gyeonggi-do (KR); Choi, Utah, 345-1501 Gyeonggi-do (KR)
(74) Representative: Dr. Weitzel & Partner

(57) **Abstract**

A liquid crystal display includes a substrate and a liquid crystal layer. The liquid crystal display further includes a first electrode disposed between the liquid crystal layer and the substrate. The liquid crystal display further includes a second electrode (PX) disposed between the liquid crystal layer and the substrate and configured to cooperate with the first electrode for generating an electric field to control molecules in the liquid crystal layer. The liquid crystal display further includes a reference voltage line (CL) configured to provide a reference voltage to the first electrode. The liquid crystal display further includes a reference voltage supplier (800) configured to provide the reference voltage to the reference voltage line (CL). The liquid crystal display further includes a reference voltage discharger (900) electrically connected to the reference voltage line (CL).

## Description

### BACKGROUND

### (a) Field of the Invention

The present invention relates to a liquid crystal display.

### (b) Description of the Related Art

A liquid crystal display may orient liquid crystal molecules of a liquid crystal layer to control an amount of transmitted light.

For a conventional liquid crystal display, the quality of its side visibility may be substantially less desirable than the quality of its front visibility, such that the viewing angle of the liquid crystal display may be insufficient. In a configuration for implementing a sufficiently wide viewing angle, two field generating electrodes may be disposed on a same substrate in a liquid crystal display in which. The two field generating pixel electrodes may include a pixel electrode that is configured for receiving a data voltage and a common electrode that is configured for receiving a reference voltage.

Nevertheless, if two field generating electrodes are disposed on the same substrate, impurities flowing from an alignment layer may be adsorbed by at least one of the two field generating electrodes and may become a barrier that may prevent charges charged between the two field generating electrodes from being fully discharged to the liquid crystal layer. Accordingly, after power of the liquid crystal display has been turned off, charges of the pixel electrode may be discharged, but charges of the common electrode may not be fully discharged. As a result, when the power of the liquid crystal display is turned on again, a value of the reference voltage may be changed, and undesirably effects (such as flickers) may occur in the displayed image.

The above information disclosed in this Background section is only for enhancement of understanding of the background of the invention. The Background section may contain information that does not form the prior art that is already known in this country to a person of ordinary skill in the art.

### SUMMARY

Embodiments of the present invention may be related to a liquid crystal display having capable of discharging potential of a field generating electrode to which a reference voltage is applied after power of the liquid crystal display is turned off, such that a desirable reference voltage may be provided when the liquid crystal display is turned on again and that satisfactory image quality may be provided.

One or more embodiments of the present invention may be related to a liquid crystal display that includes a substrate and a liquid crystal layer. The liquid crystal display may further include a first electrode disposed between the liquid crystal layer and the substrate. The liquid crystal display may further include a second electrode disposed between the liquid crystal layer and the substrate and configured to cooperate with the first substrate for generating an electric field to control molecules in the liquid crystal layer. The liquid crystal display may further include a reference voltage line configured to provide a reference voltage to the first electrode. The liquid crystal display may further include a reference voltage supplier configured to provide the reference voltage to the reference voltage line. The liquid crystal display may further include a reference voltage discharger electrically connected to the reference voltage line.

The reference voltage discharger may include a discharge switching element electrically connected between the reference voltage line and a ground that has a ground voltage.

The discharge switching element may be a field effect transistor.

The reference voltage discharger may further include a comparator and an amplifier connected to the comparator. A control terminal of the discharge switching element may be electrically connected to an output terminal of the amplifier.

The reference voltage discharger may further include an inverter connected between the comparator and the amplifier.

The reference voltage discharger may be integrated in a power management integrated circuit (PMIC).

The reference voltage discharger may include a discharge resistor that is electrically connected to a ground.

The reference voltage discharger may include a discharge switching element configured to receive an input voltage.

The discharge switching element may be a field effect transistor.

The discharge switching element may be a bipolar junction transistor.

The liquid crystal display may further include a pixel voltage discharging switching element that is electrically connected to a pixel of the liquid crystal display.

The reference voltage discharger may include a bipolar junction transistor.

The reference voltage line may be electrically connected to an emitter of the bipolar junction transistor. A collector of the bipolar junction transistor may be electrically connected to a ground that has a ground voltage.

The reference voltage discharger may include a discharge resistor electrically connected between the reference voltage line and a ground that has a ground voltage.

A resistance value of the discharge resistor may be in a range of 13 kilohm to 1,000 kilohm.

The liquid crystal display may further include a pixel that includes a thin film transistor. The liquid crystal display may further include a pixel voltage discharge circuit electrically connected to a thin film transistor for discharging potential charged in the pixel. The second electrode may be electrically connected to the thin film transistor.

The liquid crystal display may further include an insulating layer disposed between the first electrode and the second electrode.

At least one of the first electrode and the second electrode may include a plurality of branch electrodes.

The liquid crystal display may include a second reference line configured to provide the reference voltage to the first electrode.

The reference voltage discharger may include a first discharge switching element and a second discharge switching element. The second discharge switching element may be electrically connected between the second reference voltage line and a ground that has a ground voltage.

The reference voltage discharger may include a first discharge resistor and a second discharge resistor. The second discharge resistor may be electrically connected between the second reference voltage line and a ground that has a ground voltage.

One or more embodiments of the present invention may be related to a liquid crystal display that include the following elements: a substrate; a first field generating electrode and a second field generating electrode disposed on the substrate; a reference voltage line disposed on the substrate and transferring a reference voltage to any one of the first field generating electrode and the second field generating electrode; a reference voltage supplier connected to the reference voltage line; and a reference voltage discharger connected to the reference voltage line.

The reference voltage discharger may include a discharge switching element connected between the reference voltage line and a ground voltage.

The discharge switching element may be a field effect transistor.

The reference voltage discharger may further include a comparator, and an amplifier connected to the comparator, and a control terminal of the discharge switching element may be connected to an output terminal of the amplifier.

The reference voltage discharger may further include an inverter connected between the comparator and the amplifier.

The reference voltage discharger may be integrated in a power management IC (PMIC).

The reference voltage discharger may include a discharge resistor.

The power management IC may further include a pixel voltage discharging switching element.

The discharge switching element may be a bipolar junction transistor.

The reference voltage line may be connected to an emitter of the discharge switching element, and a ground voltage may be connected to a collector of the discharge switching element.

The reference voltage discharger may include a discharge resistor connected between the reference voltage line and a ground voltage.

A resistance value of the discharge resistor may be in a range of about 13 kilohm to about 1,000 kilohm.

The first field generating electrode and the second field generating electrode may be overlapped with each other with an insulating layer therebetween.

At least one of the first field generating electrode and the second field generating electrode may include a plurality of branch electrodes.

According to one or more embodiments of the present invention, the liquid crystal display includes a reference voltage discharger that may electrically connect a reference voltage line to a ground. , Therefore, a reference potential may be substantially discharged when power of the liquid crystal display is turned off and may not substantially affect the reference voltage value when the liquid crystal display is turned on again. Advantageously, the amount of flickers may be minimized, and satisfactory image quality may be provided.

### BRIEF DESCRIPTION OF THE DRAWINGS

FIG. 1A is a block diagram illustrating a liquid crystal display according to one or more embodiments of the present invention.
FIG. 1B is a block diagram illustrating a liquid crystal display according to one or more embodiments of the present invention.
FIG. 2 is a layout view illustrating (a pixel of) a liquid crystal display according to one or more embodiments of the present invention.
FIG. 3 is a cross-sectional view of the liquid crystal display of FIG. 2 taken along line III-III.
FIG. 4 is a diagram illustrating a reference voltage discharger of a liquid crystal display according to one or more embodiments of the present invention.
FIG. 5 is a diagram illustrating a reference voltage discharger of a liquid crystal display according to one or more embodiments of the present invention.
FIG. 6 is a diagram illustrating a reference voltage discharger of a liquid crystal display according to one or more embodiments of the present invention.
FIG. 7 is a diagram illustrating a reference voltage discharger of a liquid crystal display according to one or more embodiments of the present invention.
FIG. 8 is a diagram illustrating a reference voltage discharger of a liquid crystal display according to one or more embodiments of the present invention.
FIG. 9 is a diagram illustrating a reference voltage discharger of a liquid crystal display according to one or more embodiments of the present invention.
FIG. 10 is a diagram illustrating a reference voltage discharger of a liquid crystal display according to one or more embodiments of the present invention.
FIG. 11 is a diagram illustrating a reference voltage discharger of a liquid crystal display according to one or more embodiments of the present invention.
FIG. 12 is a diagram illustrating a reference voltage discharger of a liquid crystal display according to one or more embodiments of the present invention.
FIG. 13 is a diagram illustrating a reference voltage discharger of a liquid crystal display according to one or more embodiments of the present invention.
FIG. 14 is a diagram illustrating a reference voltage discharger of a liquid crystal display according to one or more embodiments of the present invention.
FIG. 15 is a graph illustrating flicker data associated with a conventional liquid crystal display and flicker data associated with a liquid crystal display according to one or more embodiments of the present invention.

### DETAILED DESCRIPTION OF EMBODIMENTS

Embodiments of the present invention will be described more fully hereinafter with reference to the accompanying drawings. As those skilled in the art would realize, the described embodiments may be modified in various ways, all without departing from the spirit or scope of the present invention.

In the drawings, the thickness of layers, films, panels, regions, etc., may be exaggerated for clarity. Like reference numerals may designate like elements in the specification. It will be understood that when an element such as a layer, film, region, or substrate is referred to as being "on" another element, it can be directly on the other element, or intervening elements may also be present. In contrast, when an element is referred to as being "directly on" another element, there are no intervening elements present (except environmental elements such as air).

Although the terms first, second, etc. may be used herein to describe various signals, elements, components, regions, layers, and/or sections, these signals, elements, components, regions, layers, and/or sections should not be limited by these terms. These terms may be used to distinguish one signal, element, component, region, layer, or section from another signal, region, layer or section. Thus, a first signal, element, component, region, layer, or section discussed below may be termed a second signal, element, component, region, layer, or section without departing from the teachings of the present invention. The description of an element as a "first" element may not require or imply the presence of a second element or other elements. The terms first, second, etc. may also be used herein to differentiate different categories of elements. For conciseness, the terms first, second, etc. may represent first-type (or first-category), second-type (or second-category), etc., respectively.

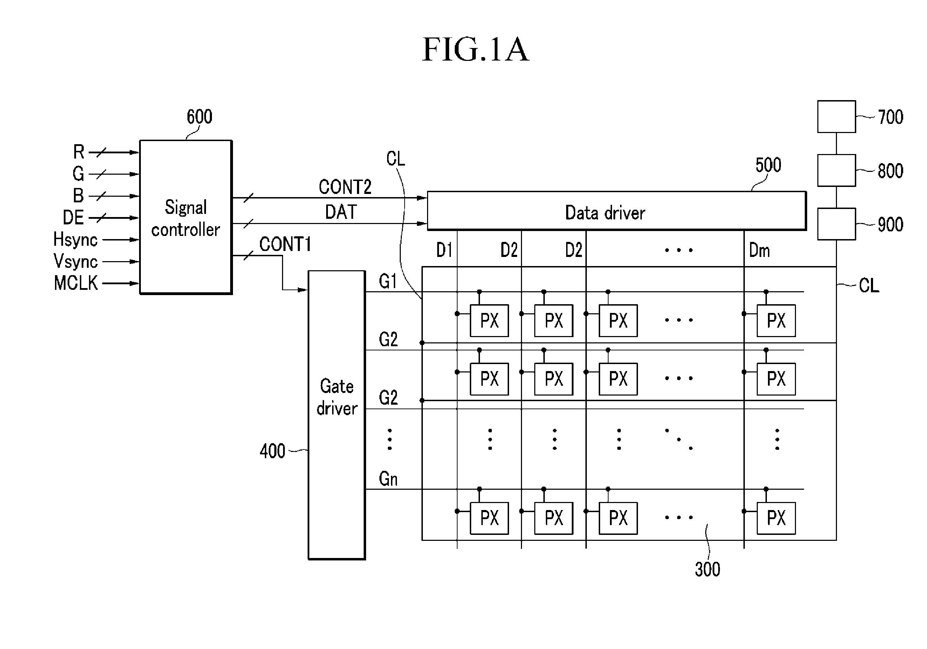

FIG. 1A is a block diagram illustrating a liquid crystal display according to one or more embodiments of the present invention.

Referring to FIG. 1A, the liquid crystal display includes a liquid crystal panel assembly 300, a gate driver 400, a data driver 500, a signal controller 600, a power management integrated circuit (PMIC) 700, a reference voltage supplier 800, and a reference voltage discharger 900.

The liquid crystal panel assembly 300 includes a plurality of signal lines G₁-Gₙ, D₁₋Dₘ, and CL. The liquid crystal panel assembly 300 further includes a plurality of pixels PX connected to the signal lines and arranged substantially in a matrix form.

The signal lines G₁₋Gₙ, D₁₋Dₘ, and CL include a plurality of gate lines G₁₋Gₙ for transferring gate signals (also referred to as "scanning signals"), a plurality of data lines D₁₋Dₘ for transferring data voltages, and a reference voltage line CL for transferring a reference voltage.

The gate lines G₁-Gₙ extend substantially in a row direction and are substantially parallel to each other. The data lines D₁-Dₘ extend substantially in a column direction and are substantially parallel to each other.

The reference voltage line CL includes a portion extending in parallel to the gate lines G₁-Gₙ. In one or more embodiments, the reference voltage line CL may include a portion extending in parallel to the data lines D₁-Dₘ. The reference voltage line CL includes a connection portion surrounding a display area, wherein the display area may be defined by the plurality of pixels PX.

The connection portion of the reference voltage line CL surrounding the display area is electrically connected to the reference voltage supplier 800.

The reference voltage supplier 800 is electrically connected to the power management IC (PMIC) 700.

The reference voltage discharger 900 is electrically connected between the reference voltage supplier 800 and the reference voltage line CL.

The gate driver 400 is electrically connected to the gate lines G₁₋Gₙ of the liquid crystal panel assembly 300 to apply gate signals (which may include a gate-on voltage Von and a gate-off voltage Voff) to the gate lines G₁-Gₙ.

The data driver 500 is electrically connected to the data lines D₁-Dₘ of the liquid crystal panel assembly 300. The data driver 500 may select gray voltages from a gray voltage generator (not illustrated) and may apply the selected gray voltages to the data lines D₁-Dₘ as data voltages. In one or more embodiments, the gray voltage generator may provide only a predetermined number of reference gray voltages, and the data driver 500 may generate desired data voltages by dividing the reference gray voltages.

The signal controller 600 may control the gate driver 400 and the data driver 500.

The power management IC 700 may transfer analog power (AVDD) to the reference voltage supplier 800. The reference voltage supplier 800 may distribute the analog power supplied from the power management IC 700 into a reference voltage Vcom and may transfer the reference voltage Vcom to the reference voltage line CL.

All the reference voltage lines CL are electrically connected to each other; therefore, magnitudes of the reference voltages Vcom in the reference voltage lines CL may be equal. In one or more embodiments, the magnitudes of the reference voltages Vcom associated with different reference voltage lines CL may be different from each other according to a position of the reference voltage lines CL; the differences may be caused by a voltage drop effect due to resistance of the reference voltage lines CL.

The reference voltage discharger 900 is electrically connected between the reference voltage supplier 800 and the reference voltage line CL to discharge a potential charged in the reference voltage line CL when the power of the reference voltage supplier 800 is turned off.

One or more of the drive devices 400, 500, 600, 700, 800, and 900 may be directly installed on the liquid crystal panel assembly 300 in at least one IC chip form, installed on a flexible printed circuit film (not illustrated) to be attached to the liquid crystal panel assembly 300 in a tape carrier package (TCP) form, or installed on a separate printed circuit board (not illustrated). In one or more embodiments, one or more of the drive devices 400, 500, 600, 700, 800, and 900 may be integrated to the liquid crystal panel assembly 300 together with the signal lines G₁₋Gₙ and D₁-Dₘ, a thin film transistor switching element Q, and so on. In one or more embodiments, at least some of the drive devices 400, 500, 600, 700, 800, and 900 may be integrated in a single chip, wherein at least one of the drive devices or at least one circuit element of the drive devices may be disposed at the outside of the single chip.

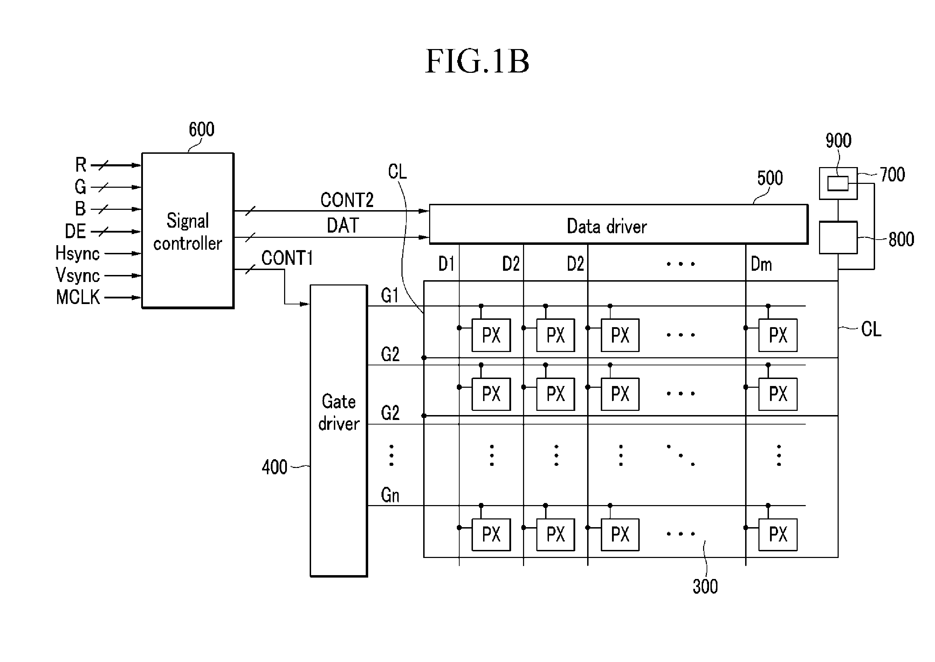

FIG. 1B is a block diagram illustrating a liquid crystal display according to one or more embodiments of the present invention.

One or more features of the liquid crystal display illustrated in FIG. 1B may be analogous to one or more features of the liquid crystal display illustrated in FIG. 1A.

The liquid crystal display illustrated in FIG. B includes a liquid crystal panel assembly 300, a gate driver 400, a data driver 500, a signal controller 600, a power management IC (PMIC) 700, a reference voltage supplier 800, and a reference voltage discharger 900.

The liquid crystal panel assembly 300 includes a plurality of signal lines G₁-Gₙ, D₁₋Dₘ, and CL. The liquid crystal panel assembly 300 further includes a plurality of pixels PX connected to the signal lines and arranged substantially in a matrix form.

The signal lines G₁-Gₙ, D₁₋Dₘ, and CL include a plurality of gate lines G₁₋Gₙ for transferring gate signals, a plurality of data lines D₁-Dₘ for transferring data voltages, and a reference voltage line CL for transferring a reference voltage.

The reference voltage line CL includes a portion extending in parallel to the gate lines G₁-Gₙ. In one or more embodiments, the reference voltage line CL may include a portion extending in parallel to the data lines D₁-Dₘ. The reference voltage line CL includes a connection portion surrounding a display area, wherein the display area may be defined by the plurality of pixels PX.

The connection portion of the reference voltage line CL surrounding the display area is electrically connected with the reference voltage supplier 800.

The reference voltage supplier 800 is electrically connected to the power management IC (PMIC) 700.

The reference voltage discharger 900 is disposed in (and electrically connected to) the power management IC (PMIC) 700.

The gate driver 400 is electrically connected to the gate lines G₁₋Gₙ of the liquid crystal panel assembly 300 to apply gate signals (which may include a gate-on voltage Von and a gate-off voltage Voff) to the gate lines G₁-Gₙ.

The data driver 500 is electrically connected to the data lines D₁-Dₘ of the liquid crystal panel assembly 300. The data driver 500 may select gray voltages from a gray voltage generator (not illustrated) and may apply the selected gray voltages to the data lines D₁-Dₘ as data voltages.

The signal controller 600 may control the gate driver 400 and the data driver 500.

The power management IC 700 may transfer analog power (AVDD) to the reference voltage supplier 800. The reference voltage supplier 800 may distribute the analog power supplied from the power management IC 700 into a reference voltage Vcom and may transfer the reference voltage Vcom to the reference voltage line CL.

All the reference voltage lines CL are electrically connected to each other; therefore, magnitudes of the reference voltages Vcom in the reference voltage lines CL may be equal. In one or more embodiments, the magnitudes of the reference voltages Vcom associated with different reference voltage lines CL may be different from each other according to a position of the reference voltage lines CL; the differences may be caused by a voltage drop effect due to resistance of the reference voltage lines CL.

The reference voltage discharger 900 is disposed in (and electrically connected to) the power management IC 700 to discharge a potential charged in the reference voltage line CL when the power of the reference voltage supplier 800 is turned off.

In one or more embodiments, as illustrated in FIGS. 1A and 1B, the reference voltage supplier 800 and the reference voltage line CL are electrically connected to each other at one point. In one or more embodiments of the present invention, a plurality of connection portions for electrically connecting the reference voltage lines CL and reference voltage supplier 800 may be disposed according to a shape and a layout the reference voltage lines CL. In one or more embodiments, magnitudes of the reference voltages Vcom applied to the plurality of connection portions may be equal. In one or more embodiments, magnitudes of the reference voltages Vcom applied to the plurality of connection portions may be different from each other.

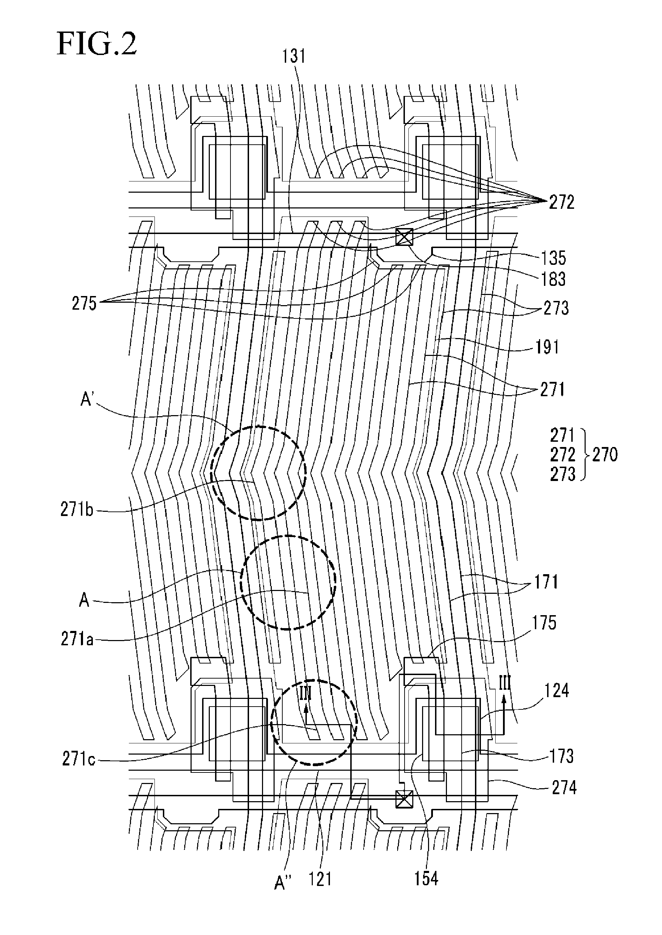

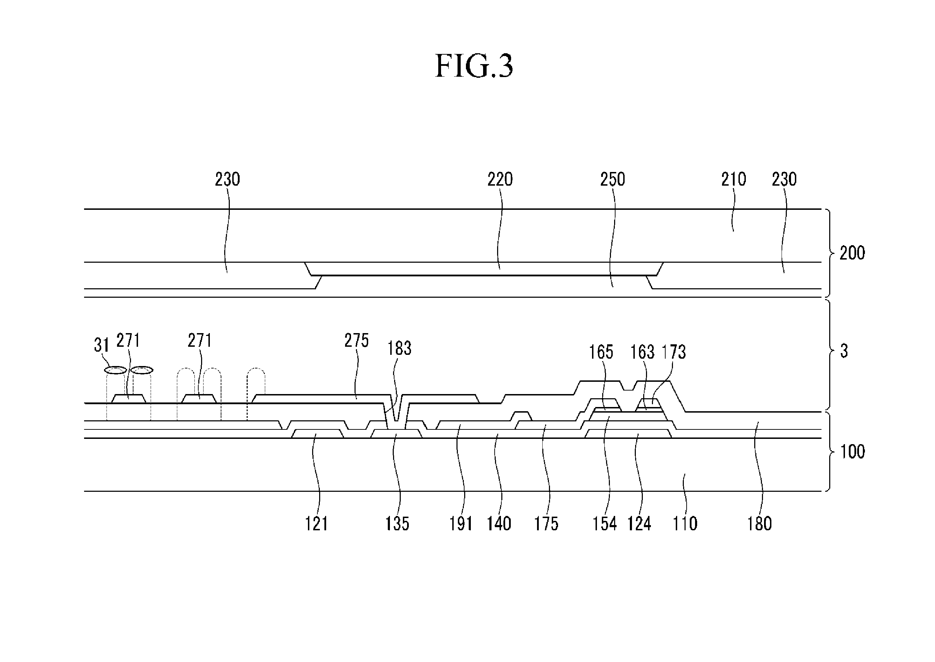

FIG. 2 is a layout view illustrating (a pixel of) a liquid crystal display according to one or more embodiments of the present invention. FIG. 3 is a cross-sectional view of the liquid crystal display of FIG. 2 taken along line III-III.

Referring to FIGS. 2 and 3, the liquid crystal display includes a lower panel 100, an upper panel 200 overlapping the lower panel 100, and a liquid crystal layer 3 interposed between the panels 100 and 200.

The lower panel 100 may include an insulation substrate 110 that is made of transparent glass or transparent plastic.

A gate conductor including a gate line 121 and a reference voltage line 131 is disposed on the insulation substrate 110.

The reference voltage line 131 may transfer a predetermined reference voltage. The reference voltage line 11 includes expansion connection portion 135 for connection with a second field generating electrode 270. The reference voltage line 131 is connected to the second field generating electrode 270 to transfer the reference voltage to the second field generating electrode 270. The reference voltage line 131 may be parallel to the gate line 121 and may be made of the same material as the gate line 121. In one or more embodiments of the present invention, the reference voltage line 131 may extend in parallel to the data line 171 and may extend in a vertical direction to the gate line 121. In one or more embodiments, the data line 171 has a curved portion, and the reference voltage line 131 may have a curved portion substantially in parallel to the curved portion of the data line 171 to have a curved portion. In one or more embodiments, the reference voltage line 131 may not extend in a direction vertical to the gate line 121.

A gate insulating layer 140 made of silicon nitride (SiNx) or silicon oxide (SiOx) is disposed on the gate conductor (including the gate line 121 and the reference voltage line 131). The gate insulating layer 140 may have a multilayered structure including at least two insulating layers having different physical properties.

A semiconductor 154 made of amorphous silicon or polysilicon is disposed on the gate insulating layer 140. The semiconductor 154 may at least partially overlap the gate electrode 124.

Ohmic contacts 163 and 165 are disposed on the semiconductor 154. The ohmic contacts 163 and 165 may be made of n+ hydrogenated amorphous silicon doped with n-type impurity (such as phosphorus at high concentration or silicide). The ohmic contacts 163 and 165 may form a pair disposed on the semiconductor 154.

The semiconductor 154 may include an oxide semiconductor, and in the case where the semiconductor 154 includes the oxide semiconductor, the ohmic contacts 163 and 165 may be omitted.

A data conductor including a data line 171, a source electrode 173, and a drain electrode 175 is disposed on the ohmic contacts 163 and 165 and the gate insulating layer 140.

The data line 171 may transfer a data signal. The data line 171 may extend in a vertical direction and may cross the gate line 121 and the reference voltage line 131. The data line 171 may define a pixel area together with the gate line 121. In one or more embodiments, the data line 171 may have a first portion disposed in a substantially middle region of the pixel area and having a curved shape in order to facilitate maximum transmittance of the liquid crystal display. The curved shape may be a V-letter shape. The data line 171 may further include a second portion which disposed at a predetermined angle with respect to a section of the first portion.

In one or more embodiments, the predetermined angle may be in a range of about 7° to about 15°.

The source electrode 173 may be a part of the data line 171. The drain electrode 175 may extend in parallel with the source electrode 173. Accordingly, the drain electrode 175 may be parallel to a part of the data line 171.

The gate electrode 124, the source electrode 173, and the drain electrode 175 may form a thin film transistor (TFT) together with the semiconductor 154. A channel of the thin film transistor is positioned in the semiconductor 154 between the source electrode 173 and the drain electrode 175.

In one or more embodiments of the present invention, the semiconductor 154, the ohmic contacts 163 and 165, the data line 171, and the drain electrode 175 may have substantially the same plane shape, except for the channel portion of the thin film transistor. In one or embodiments, the semiconductor 154, the ohmic contacts 163 and 165, the data line 171, and the drain electrode 175 may be formed using a same exposure mask in a same photolithography process.

A first field generating electrode 191 is disposed on (and directly contacts) a part of the drain electrode 175 and the gate insulating layer 140.

The first field generating electrode 191 includes a pair of curved edges that are substantially parallel to the first curved portion and the second curved portion of the data line 171.

The first field generating electrode 191 covers the part of the drain electrode 175 and is physically and electrically directly connected with the drain electrode 175.

The first field generating electrode 191 may be made of one or more polycrystalline, monocrystalline, or amorphous transparent conductive materials, such as indium tin oxide (ITO) and/or indium zinc oxide (IZO).

A passivation layer 180 is disposed on the data conductor (which includes the data line 171 and the drain electrode 175), the exposed portion of the semiconductor 154, and the first field generating electrode 191. The passivation layer 180 is made of an inorganic insulator, such as at least one of silicon nitride and silicon oxide. In one or more embodiments, the passivation layer 180 may be made of an organic insulator that includes a flat surface. The organic insulator may have photosensitivity. A dielectric constant of the passivation layer 180 may be about 4.0 or less. The passivation layer 180 may have a double layer structure that includes a lower inorganic layer and an upper organic layer so as not to damage the exposed semiconductor 154 portion while maintaining an excellent insulating characteristic.

A contact hole (not illustrated) exposing an end portion of the data line 171 is disposed in the passivation layer 180. A contact hole 183 exposing the connection portion 135 of the reference voltage line 131 and a contact hole (not illustrated) exposing an end portion of the gate line 121 are formed in the passivation layer 180 and the gate insulating layer 140.

The second field generating electrode 270 is disposed on the passivation layer 180. The second field generating electrode 270 overlaps the first field generating electrode 191. The second field generating electrode 270 includes a plurality of branch electrodes 271, a horizontal connection portion 272 connecting the plurality of branch electrodes 271, and a vertical connection portion 273 connecting the horizontal connection portions 272. The second field generating electrode 270 is made of one or more polycrystalline, monocrystalline, or amorphous transparent conductive materials, such as indium tin oxide (ITO) and/or indium zinc oxide (IZO). The second field generating electrodes 270 disposed at adjacent pixels are electrically connected to each other.

The branch electrode 271 of the second field generating electrode 270 includes a first portion 271a (see A) and a second portion 271b (see A') that are parallel to the second portion of the data line 171 and the (V-letter shaped) first portion of the data line 171 described above, respectively. A section of the second portion 271b may be disposed at an angle in a range of about 7° to about 15° with respect to the first portion 271a.

The horizontal connection portion 272 of the second field generating electrode 270 is substantially parallel to the gate line 121 and connects the branch electrodes 271 disposed on two sides of the horizontal connection portion 272 to each other. The horizontal connection portion 272 of the second field generating electrode 270 has a first opening 274 disposed at a corner or a side of a pixel area and exposing one or more portions of one or more of the gate electrode 124, the semiconductor 154, the data line 171, the drain electrode 175, the source electrode 173, and the reference voltage line 131. The horizontal connection portion 272 of the second field generating electrode 270 has a reference electrode extension 275 extending toward the connection portion 135 of the reference voltage line 131. The second field generating electrodes 270 disposed at adjacent pixels are electrically connected to each other.

The branch electrode 271 of the second field generating electrode 270 further includes a third portion 271c (see A"). The third portion 271c is disposed at a predetermined angle with respect to the horizontal connection portion 272 of the second field generating electrode 270. The third portion 271c may be disposed at an angle in a range of about 7° to about 15° with respect to a section of the first portion 271a. In one or more embodiments, an acute angle between the first portion 271a of the branch electrode 271 of the second field generating electrode 270 and the horizontal connection portion 272 is, by an amount in a range of about 7° to about 15°, larger than an acute angle between a section of the second portion 271b and the horizontal connection portion 272 or an acute angle between the third portion 271c and the horizontal connection portion 272.

As can be appreciated from FIG. 2 and the foregoing discussion, the branch electrode 271 of the second field generating electrode 270 may include the first portion 271a, the second portion 271b, and the third portion 271c disposed at predetermined angles with respect to the horizontal connection portion 272. Therefore, field generating directions of the center and an edge of the pixel area may be regulated. In one or more embodiments of the present invention, the second portion 271b and the third portion 271c, which are disposed at two ends of the first portion 271a, are disposed at predetermined angles with respect to the horizontal connection portion 272; as a result, directions of electric fields applied to the liquid crystal layer 3 may rotate the liquid crystal molecules 31 of the liquid crystal layer 3 in predetermined directions. Advantageously, it is possible to prevent artifacts that may be potentially caused by irregular rotation of the liquid crystal molecules 31 at the center of the pixel area and/or at boundaries of the pixel area. In one or more embodiments, the rotation angles of the liquid crystal molecules 31 corresponding to the portions 271a, 271b, and 271c may be set to be different from each other. Advantageously, a viewing angle of the liquid crystal display may be maximized, and a color tone of the displayed image may be compensated.

In one or more embodiments, when pressure from the outside is applied to the second portion 271b (which is the center of the branch electrode 271) and/or applied to the third portion 271c (which is an end of the branch electrode 271), irregular positions of liquid crystal molecules due to the external pressure may be prevented from being dispersed to the first portion 271a of the branch electrode 271. In one or more embodiments, an irregular behavior of the liquid crystal molecules that occurs at the second portion 271b and/or the third portion 271c may not substantially move across the boundary between the portions 271b and 271a and/or the boundary between the portions 271c and 271a given that the first portion 271a of the branch electrode 271 is disposed at a relatively larger angle with respect to the horizontal connection portion 272. Advantageously, it is possible to prevent a bruising phenomenon potentially caused by an external pressure.

The vertical connection portion 273 of the second field generating electrode 270 extends above (and/or overlaps) the data line 171 that is disposed between two adjacent pixels and has a first opening 274 located on a part of the data line 171.

The extension 275 of the second field generating electrode 270 is physically and electrically connected to the reference voltage line 131 through a contact hole 183 formed in the passivation layer 180 and the gate insulating layer 140.

In one or more embodiments, an alignment layer is coated on the second field generating electrode 270 and the passivation layer 180. The alignment layer may be a horizontal alignment layer and may be rubbed in a predetermined direction.

The upper panel 200 may include an insulation substrate 210 that is made of transparent glass or transparent plastic.

A light blocking member 220 is disposed on the insulation substrate 210. The light blocking member 220 may be called a black matrix and may block light leakage.

A plurality of color filters 230 is disposed on the substrate 210. A substantial portion of each of the color filters 230 may exist in a region surrounded by the light blocking member 220 and may be elongated in a vertical direction along a column of the first field generating electrode 191. Each color filter 230 may display one of several primary colors, such as three primary colors of red, green, and blue.

An overcoat 250 is disposed on the color filters 230 and the light blocking member 220. The overcoat 250 may be made of an (organic) insulator, may prevent the color filter 230 from being exposed, and may provide a flat surface. The overcoat 250 may be omitted.

In one or more embodiments of the present invention, at least one of the color filters 230 and the light blocking member 220 may be included in the lower panel 100, not the upper panel 200.

The liquid crystal layer 3 includes a nematic liquid crystal material having positive dielectric anisotropy. The liquid crystal molecules 31 of the liquid crystal layer 3 may be aligned so that directions of long axes thereof are parallel to the panels 100 and 200, and the directions may have a 90°twisted structure in a spiral form from a rubbing direction of the alignment layer of the lower panel 100 up to the upper panel 200.

The first field generating electrode 191 may receive a data voltage from the drain electrode 175, and the second field generating electrode 270 may receive a reference voltage having a predetermined magnitude from the reference voltage line 131 (through the connection portion 135). The second field generating electrodes 270 are electrically connected to each other and may receive the reference voltage from the reference voltage supplier 800 disposed outside the display area. The second field generating electrodes 270 may receive the reference voltage having a uniform magnitude from the reference voltage line 131 in order to prevent a voltage drop in the display area.

The first field generating electrode 191 (to which the data voltage may be applied) may generate an electric field together with the second field generating electrode 270 (which may receive the reference voltage); as a result, the liquid crystal molecules 31 of the liquid crystal layer 3 disposed on the two electrodes 191 and 270 may rotate in a direction parallel to the direction of the electric field. Accordingly, polarization of light passing through the liquid crystal layer 3 may be regulated according to the determined rotation directions of the liquid crystal molecules 31.

In one or more embodiments, the two field generating electrodes 191 and 270 may overlap each other, with the passivation layer 180 being disposed therebetween. In one or more embodiments, one of the two field generating electrodes is a plate type, and the other has a branch. In one or more embodiments, two field generating electrodes are included in a same panel disposed at a same side with respect to a liquid crystal layer.

Operation of a liquid crystal display is further discussed with reference to FIG. 1A and/or FIG. 1B.

The signal controller 600 may receive input image signals R, G, and B and an input control signal (for controlling display of the input image signals R, G, and B) from an external graphic controller (not illustrated). The input image signals R, G, and B may include luminance information of each pixel PX, wherein the luminance information may be associated with a predetermined number of grays, for example, 1024 (=2¹⁰), 256 (=2⁸), or 64 (=2⁶) grays. The input control signal may include a vertical synchronization signal Vsync, a horizontal synchronizing signal Hsync, a main clock MCLK, and a data enable signal DE.

The signal controller 600 may properly process the input image signals R, G, and B in accordance with the operational condition of the liquid crystal panel assembly 300 based on the input image signals R, G and B and the input control signal, may generate a gate control signal CONT1 and a data control signal CONT2, may transmit the gate control signal CONT1 to the gate driver 400, and may transmit the data control signal CONT2 and a processed image signal DAT to the data driver 500.

The gate control signal CONT1 may include a scanning start signal STV for instructing scanning start and may include at least one clock signal for controlling an output period of the gate-on voltage Von. The gate control signal CONT1 may further include an output enable signal OE for limiting duration of the gate-on voltage Von.

The data control signal CONT2 may include a horizontal synchronization start signal STH for informing transmission start of the digital image signal DAT for pixels PX in one row, a load signal LOAD for instructing an analog data voltage to be applied to the data lines D₁₋Dₘ, and a data clock signal HCLK. The data control signal CONT2 may further include an inversion signal RVS for inverting a polarity of the data voltage with respect to the reference voltage Vcom.

According to the data control signal CONT2 from the signal controller 600, the data driver 500 may receive the digital image signal DAT for pixels PX in one row, may select a gray voltage corresponding to each digital image signal DAT to convert the digital image signal DAT into an analog data voltage, and may apply the converted analog data voltage to the corresponding data lines D₁₋Dₘ.

The gate driver 400 may apply a gate-on voltage Von to the gate lines G₁₋Gₙ according to the gate control signal CONT1 from the signal controller 600 to turn on switching elements Q connected to the gate lines G₁-Gₙ. As a result, the data voltages Vd applied to the data lines D₁-Dₘ may be applied to the corresponding pixels PX through the turned-on switching elements Q.

A difference between the data voltage applied to the pixel PX and the reference voltage Vcom may be a charging voltage of a liquid crystal capacitor Clc and may be called a pixel voltage. The arrangement (or orientations) of the liquid crystal molecules may be determined according to a magnitude of the pixel voltage; accordingly, polarization of light passing through the liquid crystal layer may be controlled. The polarization may determine transmittance of light; as a result, the pixel PX may display a desirable gray in accordance with of the image signal DAT.

The process may be repeated according to horizontal periods with the length of each horizontal period (referred to as "1H") being equal to the length of one period of a horizontal synchronizing signal Hsync and/or the length of one period of a data enable signal DE, Accordingly, the gate-on voltages Von are sequentially applied to all the gate lines G₁₋Gₙ and enable the data voltages to be applied to all the pixels PX to display images for each frame.

When one frame ends, the next frame starts, and a state of the inversion signal RVS applied to the data driver 500 may be controlled so that the polarity of the data voltage applied to each pixel PX is opposite to the polarity of the data voltage applied to each pixel PX in the previous frame. The process may be called a "frame inversion" process. In one or more embodiments, even in one frame, a polarity of the data voltage flowing through one data line may be periodically changed according to a characteristic of the inversion signal RVS (for example, in a row inversion and/or dot inversion configuration), or the polarities of the data voltages applied to one pixel row may be different from each other (for example, in a column inversion and/or dot inversion configuration).

After a desired image has been displayed, when the power of the liquid crystal display is turned off, all the voltages applied to the liquid crystal panel assembly 300 may be interrupted.

When the power of the reference voltage supplier 800 is turned off, the reference voltage discharger 900 may discharge a potential charged in the reference voltage line CL.

In one or more embodiments of the present invention, when the power of the reference voltage supplier 800 is turned off, the potential charged in the reference voltage line CL may be discharged by the reference voltage discharger 900. As a result, when the power of the liquid crystal display is turned on again, the reference voltage at the reference voltage line CL may have the desirable value. Advantageously, potential flickers may be prevented, and satisfactory image quality may be provided.

In one or more embodiments, the liquid crystal display may further include a pixel voltage discharger (not shown) for discharging potential charged in the pixels PX The pixel voltage discharger may be connected to a driving voltage supplier (not shown) for supplying data voltages to the pixels PX.

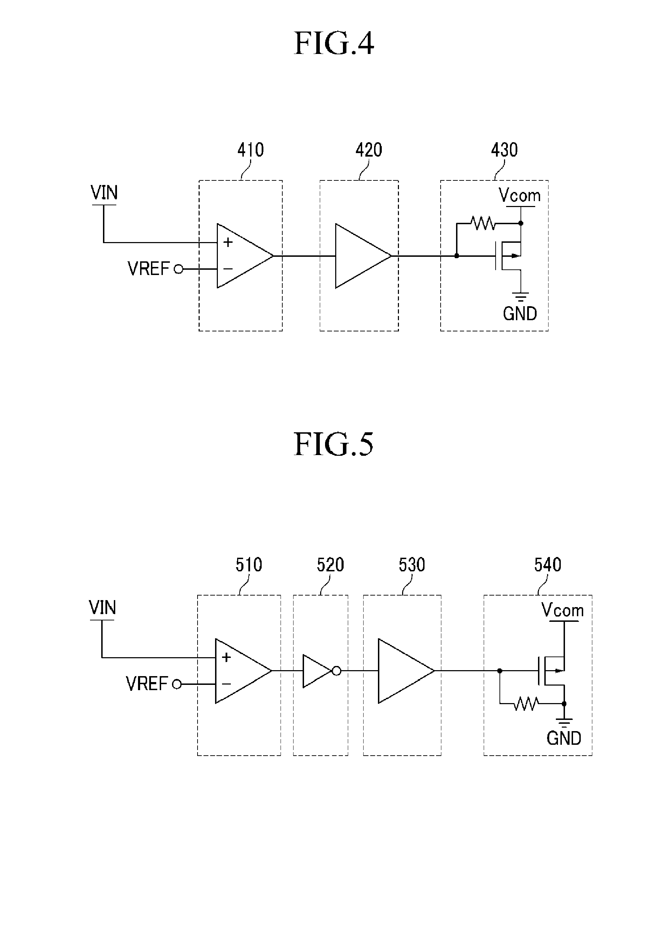

The reference voltage discharger 900 according to one or more embodiments of the present invention is further described with reference to FIGS. 4 to 9. Each of FIGS. 4 to 9 is a diagram illustrating the reference voltage discharger 900 according to one or more embodiments of the present invention.

Referring to FIG. 4, the reference voltage discharger 900 may include a first comparator 410, a first amplifier 420, and a first discharge switching element 430. The first discharge switching element 430 may be a p-type field effect transistor.

The reference voltage discharger 900 may receive an input voltage VIN from the reference voltage supplier 800. The first comparator 410 may receive the input voltage VIN. The input voltage VIN may have an off value when the power of the reference voltage supplier 800 is turned off. The off value may be smaller than a comparison voltage VREF. After the first comparator 410 compares the input voltage VIN with a comparison voltage VREF having a certain value, if the input voltage VIN has the off value and is smaller than the comparison voltage VREF, a high voltage is output. The output high voltage is amplified in the first amplifier 420 to become an amplified high voltage, which may be transferred to the first discharge switching element 430. When the amplified high voltage is transferred to the first discharge switching element 430, the first discharge switching element 430 is turned on, causing the reference voltage Vcom to have a potential of a ground voltage GND. As a result, the potential charged in the reference voltage line CL is discharged to the value of the ground voltage GND.

Referring to FIG. 5, the reference voltage discharger 900 may include a second comparator 510, a second inverter 520, a second amplifier 530, and a second discharge switching element 540. The second discharge switching element 540 may be an n-type field effect transistor.

The reference voltage discharger 900 may receive an input voltage VIN from the reference voltage supplier 800. The second comparator 510 may receive the input voltage VIN. The input voltage VIN may have an off value when the power of the reference voltage supplier 800 is turned off. The off value may be smaller than a comparison voltage VREF. After the second comparator 510 compares the input voltage VIN with a comparison voltage VREF having a certain value, if the input voltage VIN is the off value and is smaller than the comparison voltage VREF, a low voltage is output. The output low voltage is inverted into a high voltage in the second inverter 520 to be output, and the output high voltage is amplified in the second amplifier 530 to become an amplified high voltage, which may be transferred to the second discharge switching element 540. When the amplified high voltage is transferred to the second discharge switching element 540, the second discharge switching element 540 is turned on, causing the reference voltage Vcom to have a potential of the ground voltage GND. As a result, the potential charged in the reference voltage line CL is discharged to the value of the ground voltage GND.

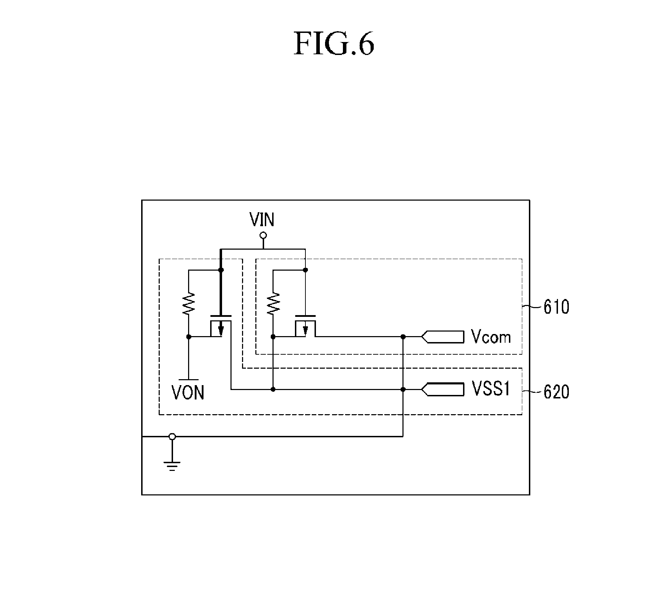

Referring to FIG. 6, the reference voltage discharger 900 may be integrated in a power management IC (PMIC), such the PMIC 700 illustrated in FIG. 1B.

A reference voltage discharging block 610 and a pixel voltage discharging block are included in the power management IC.

A discharge switching element, such as a field effect transistor, may be included in each of the reference voltage discharging block 610 and the pixel voltage discharging block 620. When the power is turned off such that the input voltage VIN has a predetermined value or less, the switching elements may be turned off, the reference voltage Vcom is instantaneously electrically connected to a terminal of an off voltage VSS1 and then discharged to the ground voltage GND, and the gate-on voltage VON is electrically connected to a terminal of the off voltage VSS1. Accordingly, the potential charged in the reference voltage line CL is discharged to the value of the ground voltage GND; simultaneously, the pixel voltage is also discharged to the off voltage VSS1.

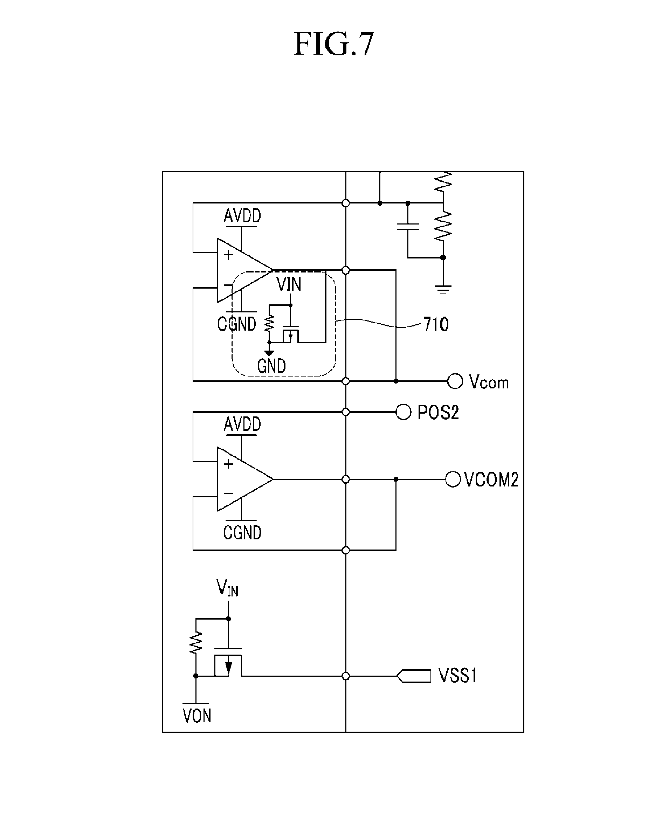

Referring to FIG. 7, the reference voltage discharger 900 may be integrated in the power management IC (PMIC) 700 illustrated in FIG. 1B.

The reference voltage discharger 900 may include a reference voltage discharger module 710 including a discharge switching element such as a field effect transistor. When the power is turned off such that the input voltage VIN has a predetermined value or less, the reference voltage Vcom is instantaneously electrically connected to a terminal of an off voltage VSS1 and then discharged to the ground voltage GND; as a result, the potential charged in the reference voltage lines CL is discharged to the value of the ground voltage GND.

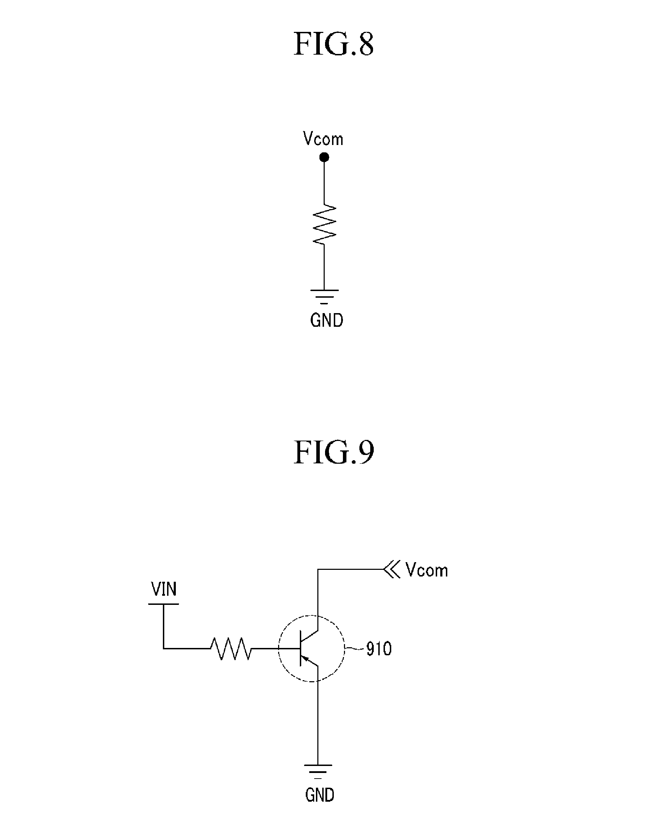

Referring to FIG. 8, the reference voltage discharger 900 may include a discharge resistor connected between at least a reference voltage line CL (which receives the reference voltage Vcom) and the ground (which has the ground voltage GND). The discharge resistor may have a substantially large resistance value. When the power of the reference voltage supplier 800 is turned on such that the reference voltage Vcom is applied to the reference voltage lines CL, only a minute amount of current may be leaked because a resistance value of the discharge resistor is large. When the power of the reference voltage supplier 800 is turned off such that the reference voltage Vcom is not applied to the reference voltage lines CL, the remaining charge in the reference voltage lines CL is discharged to the ground voltage GND. As a result, the potential charged in the reference voltage line CL is discharged to the value of the ground voltage GND. In one or more embodiments, a resistance value of the discharge resistor is about 13 kilohm or more. In one or embodiments, a resistance value of the discharge resistor may be in a range of 100 kilohm to 9999 kilohm.

Referring to FIG. 9, the reference voltage discharger 900 may include a bipolar junction transistor (BJT) 910. The reference voltage Vcom is applied to an emitter of the bipolar junction transistor 910, and the ground voltage GND is applied to a collector of the bipolar junction transistor 910. When the power is turned off, a high voltage is applied to the input value VIN, and thus the bipolar junction transistor 910 is turned on; as a result, the potential charged in the reference voltage line CL is discharged to the value of the ground voltage GND.

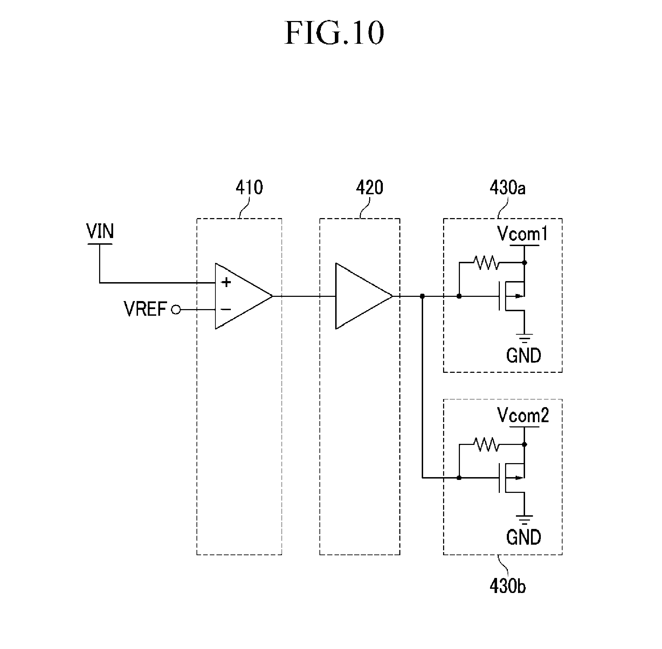

The reference voltage discharger 900 according to one or more embodiments of the present invention is further described with reference to FIGS. 10 to 14. Each of FIGS. 10 to 14 is a diagram illustrating the reference voltage discharger 900 according to one or more embodiments of the present invention.

Referring to FIG. 10, one or more features of the reference voltage discharger 900 illustrated in FIG. 10 may be analogous to the reference voltage discharger 900 illustrated in FIG. 4.

The reference voltage discharger 900 may include a comparator 410, an amplifier 420, a discharge switching element 430a, and a discharge switching element 430b. The discharge switching element 430a and the discharge switching element 430b may be p-type field effect transistors.

The reference voltage supplier 800 illustrated in FIG. 1A or FIG. 1B may apply reference voltages to a plurality of suppliers electrically connected to the reference voltage lines CL, and discharge switching element 430a and the discharge switching element 430b may be electrically connected to the plurality of suppliers (e.g., two suppliers) to which the reference voltages (e.g., Vcom1 and Vcom2) are applied.

After the first comparator 410 compares an input voltage VIN with a comparison voltage VREF, if the input voltage VIN is smaller than the comparison voltage VREF (i.e., if the power of the reference voltage supplier 800 has been turned off), a high voltage is output. The output high voltage is amplified in the first amplifier 420 to become an amplified high voltage, which may be transferred to the third discharge switching element 430a and the fourth discharge switching element 430b. When the amplified high voltage is transferred to the third discharge switching element 430a and the fourth discharge switching element 430b, the third discharge switching element 430a and the fourth discharge switching element 430b are turned on, causing a reference voltage Vcom1 and a second reference voltage Vcom2 applied to the plurality of suppliers to have a potential of the ground voltage GND. As a result, the potential charged in the reference voltage lines CL is discharged to the value of the ground voltage GND.

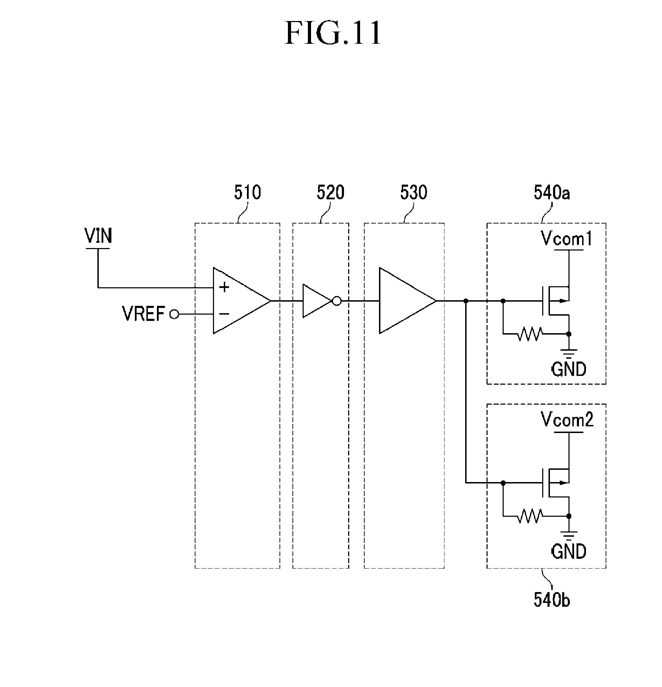

Referring to FIG. 11, one or more features of the reference voltage discharger 900 illustrated in FIG. 11 may be analogous to one of more features of the reference voltage discharger 900 illustrated in FIG. 5.

The reference voltage discharger 900 may include a second comparator 510, an inverter 520, a second amplifier 530, a fifth discharge switching element 540a, and a sixth discharge switching element 540b. The fifth discharge switching element 540a and the sixth discharge switching element 540b may be n-type field effect transistors.

The reference voltage supplier 800 illustrated in FIG. 1A or FIG. 1B may apply reference voltages to a plurality of suppliers electrically connected to the reference voltage lines CL, and the discharge switching element 530a and the discharge switching element 530b may be electrically connected to the plurality of suppliers to which the reference voltages are applied.

After the second comparator 510 compares an input voltage VIN with a comparison voltage VREF, if the input voltage VIN is smaller than the comparison voltage VREF (i.e., if the power of the reference voltage supplier 800 has been turned off), a low voltage is output. The output low voltage is inverted into a high voltage in the inverter 520 to be output, and the output high voltage is amplified in the amplifier 530 to become an amplified high voltage, which may be transferred to the fifth discharge switching element 530a and the sixth discharge switching element 530b. When the high voltage is transferred to the fifth discharge switching element 530a and the sixth discharge switching element 530b, the fifth discharge switching element 530a and the sixth discharge switching element 530b are turned on, causing a first reference voltage Vcom1 and a second reference voltage Vcom2 applied to the plurality of suppliers to have a potential of the ground voltage GND. As a result, the potential charged in the reference voltage lines CL is discharged to the value of the ground voltage GND.

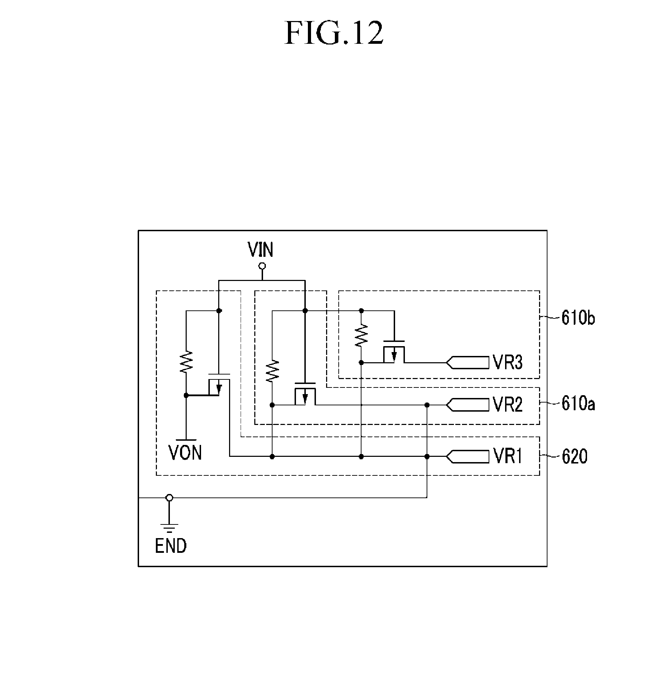

Referring to FIG. 12, one or more features of the reference voltage discharger 900 illustrated in FIG. 12 may be analogous to one or more features of the reference voltage discharger 900 illustrated in FIG. 6.

The reference voltage discharger 900 may be integrated in a power management IC (PMIC), such as the PMIC 700 illustrated in FIG. 1B.

A first reference voltage discharging block 610a, a second reference voltage discharging block 610b, and a pixel voltage discharging block 620 are included in the power management IC.

The reference voltage supplier 800 illustrated in FIG. 1A or FIG. 1B may apply reference voltages to a plurality of suppliers electrically connected to the reference voltage lines CL, and the first reference voltage discharging block 610a and the second reference voltage discharging block 610b may be connected to the plurality of suppliers to which the reference voltages are applied.

A discharge switching element, such as a field effect transistor, may be included in each of the first reference voltage discharging block 610a, the second reference voltage discharging block 610b, and the pixel voltage discharging block 620. When the power is turned off such that the input voltage VIN has a predetermined value or less, the first reference voltage VR3 and the second reference voltage VR2 applied to the plurality of suppliers are instantaneously electrically connected to an off voltage VR1 and then discharged to the ground voltage GND, and the gate-on voltage Von is electrically connected to the off voltage VR1. As a result, the potential charged in the reference voltage line CL is discharged to the value of the ground voltage GND through the plurality of suppliers. Simultaneously, the pixel voltage is also discharged.

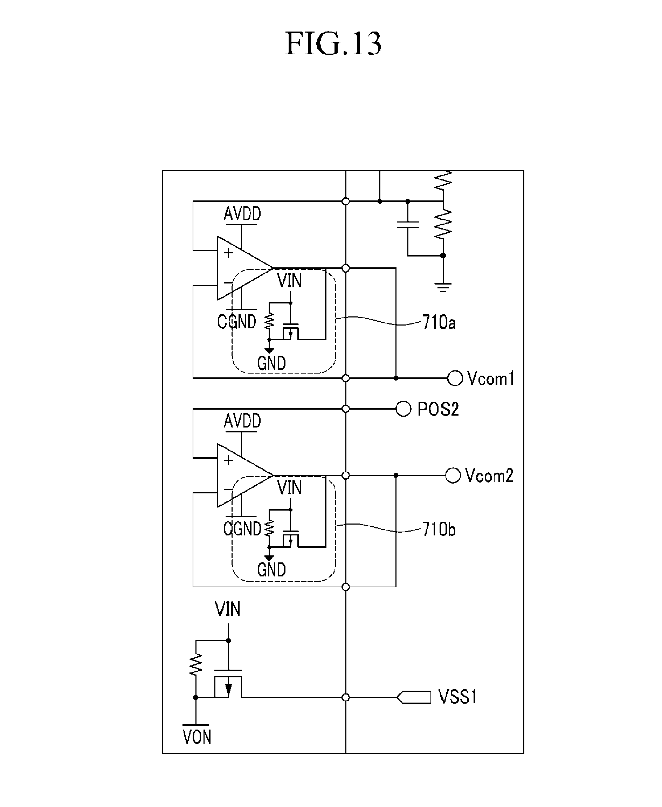

Referring to FIG. 13, one or more features of the reference voltage discharger 900 illustrated in FIG. 13 may be analogous to one or more features of the reference voltage discharger 900 illustrated in FIG. 7.

The reference voltage discharger 900 may be integrated in a power management IC (PMIC), such as the PMIC 700 illustrated in FIG. 1B.

The reference voltage supplier 800 illustrated in FIG. 1B may apply reference voltages to a plurality of suppliers connected to the reference voltage lines CL. The reference voltage discharger 900 may include a first reference voltage discharger module 710a and a second reference voltage discharger module 710b each including a discharge switching element, such as a field effect transistor. When the power is turned off such that the input voltage VIN has a predetermined value or less, the first reference voltage Vcom1 and the second reference voltage Vcom2 applied to the plurality of suppliers are instantaneously electrically connected to the off voltage VSS1 and then discharged to the ground voltage GND. Accordingly, the potential charged in the reference voltage lines CL is discharged to the value of the ground voltage GND through the plurality of suppliers.

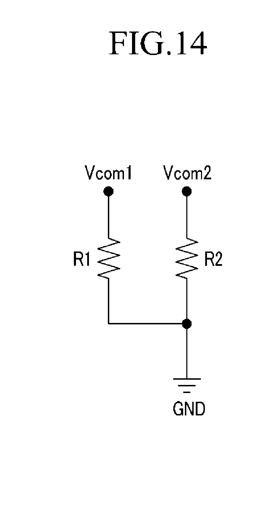

Referring to FIG. 14, one or more features of the reference voltage discharger 900 illustrated in FIG. 14 may be analogous to one or more features of the reference voltage discharger 900 illustrated in FIG. 8.

The reference voltage supplier 800 illustrated in FIG. 1A or FIG. 1B may apply reference voltages to a plurality of suppliers electrically connected to the reference voltage lines CL. The reference voltage discharger 900 may include a first discharge resistor R1 and a second discharge resistor R2 that are connected between the reference voltage lines CL (which may receive the first reference voltage Vcom1 and the second reference voltage Vcom2) and the ground (which has the ground voltage GND).

When the power of the reference voltage supplier 800 turned on such that the reference voltages Vcom1 and Vcom2 are applied to the plurality of suppliers, only a minute amount of leakage current flows through the first discharge resistor R1 and the second discharge resistor R2 because values of the first discharge resistor R1 and the second discharge resistor R2 are large. When the power of the reference voltage supplier 800 is turned off such that the reference voltages Vcom1 and Vcom2 are not applied to the plurality of suppliers, the remaining charge in the reference voltage lines CL is discharged to the ground voltage GND. As a result, the potential charged in the reference voltage line CL is discharged to the value of the ground voltage GND.

In one or more embodiments, the resistance value of each of the first discharge resistor R1 and the second discharge resistor R2 may be about 13 kilohm or more. In one or embodiments, the resistance value of each of the first discharge resistor R1 and the second discharge resistor R2 may be in a range of 100 kilohm to 9999 kilohm.

FIGS. 4 to 14 and associated description represent various examples of the reference voltage discharger 900 of a liquid crystal display according to one or more embodiments of the present invention. The reference voltage discharger 900 may include additional elements and/or alternative elements, such as one or more different elements having a switching function, or one or more different circuit elements for receiving the reference voltage and the ground voltage.

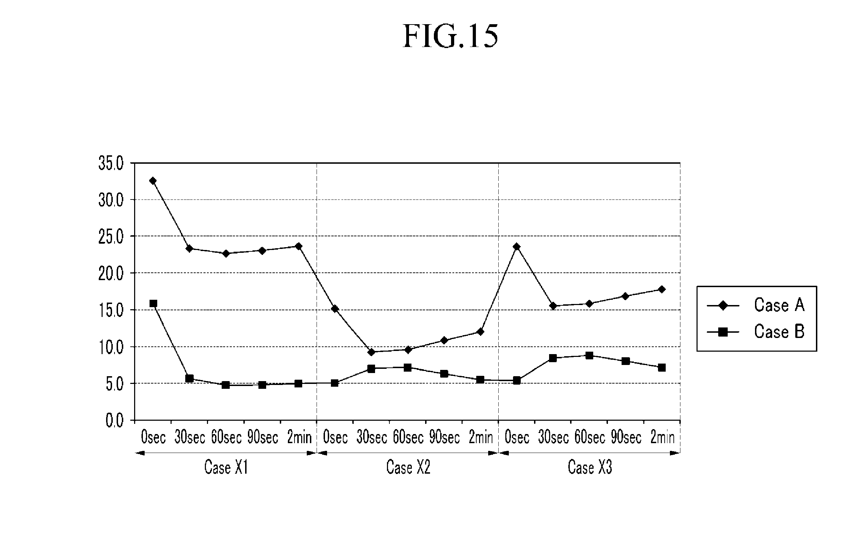

FIG. 15 is a graph illustrating flicker data associated with a conventional liquid crystal display (Case A) and flicker data associated with a liquid crystal display according to one or more embodiments of the present invention (Case B). The conventional liquid crystal display does not include a reference voltage discharger.

In a first experiment case (Case X1), 70 minutes elapse after the power of the liquid crystal display is turned off, and then the power of the liquid crystal display is turned on again. In a second experiment case (Case X2), 67 hours elapse after the power of the liquid crystal display is turned off, and then the power of the liquid crystal display is turned on again. In a third experiment case (Case X3), the power of the liquid crystal display is turned on just after the power of the liquid crystal display was turned off. Flicker amounts are measured for Case X1, Case X2, and Case X3 associated with each of Case A and Case B, and flicker values are indicated in FIG. 15. A higher flicker value is associated with a lower image quality.

Referring to FIG. 15, in comparison with the Case A, in which is associated with a conventional existing liquid crystal display, Case B according to one or more embodiments of the present invention may have substantially lower flicker values in all of Case X1, Case X2, and Case X3.

As can be appreciated from the foregoing discussion, a liquid crystal display according to one or more embodiments of the present invention includes a reference voltage discharger disposed between the reference voltage supplier and the reference voltage line; therefore, a reference potential may be substantially discharged when the power of the liquid crystal display is turned off and may not affect the reference voltage value when the liquid crystal display is turned on again. Advantageously, flickers may be minimized, and satisfactory image quality may be provided.

Embodiments of the present invention may be applicable to various types of thin film transistor array panels in which two field generating electrodes are included in a same panel and/or are disposed at a same side with respect to a liquid crystal layer.

While this invention has been described in connection with what is presently considered to be practical embodiments, it is to be understood that the invention is not limited to the disclosed embodiments. The invention is intended to cover various modifications and equivalent arrangements included within the scope of the appended claims.

## Claims

1. A liquid crystal display, comprising:
a substrate;
a liquid crystal layer;
a first electrode disposed between the liquid crystal layer and the substrate;
a second electrode disposed between the liquid crystal layer and the substrate and configured to cooperate with the first substrate for generating an electric field to control molecules in the liquid crystal layer;
a reference voltage line configured to provide a reference voltage to the first electrode;
a reference voltage supplier configured to provide the reference voltage to the reference voltage line; and
a reference voltage discharger electrically connected to the reference voltage line.

2. The liquid crystal display of claim 1, wherein
the reference voltage discharger includes a discharge switching element electrically connected between the reference voltage line and a ground that has a ground voltage.

3. The liquid crystal display of claim 2, wherein
the discharge switching element is a field effect transistor.

4. The liquid crystal display of claim 2, wherein the reference voltage discharger further includes:
a comparator, and
an amplifier connected to the comparator, and
wherein a control terminal of the discharge switching element is electrically connected to an output terminal of the amplifier.

5. The liquid crystal display of claim 4, wherein
the reference voltage discharger further includes an inverter connected between the comparator and the amplifier.

6. The liquid crystal display of claim 1, wherein
the reference voltage discharger is integrated in a power management integrated circuit (PMIC).

7. The liquid crystal display of claim 1, wherein
the reference voltage discharger includes a discharge resistor that is electrically connected to a ground or a discharge switching element configured to receive an input voltage.

8. The liquid crystal display of claim 7, wherein:
the discharge switching element is a field effect transistor or a bipolar junction transistor or the reference voltage discharger includes a bipolar junction transistor.

9. The liquid crystal display of claim 1, further comprising:
a pixel voltage discharging switching element that is electrically connected to a pixel of the liquid crystal display.

10. The liquid crystal display of claim 8, wherein
the reference voltage line is electrically connected to an emitter of the bipolar junction transistor, and
wherein a collector of the bipolar junction transistor is electrically connected to a ground that has a ground voltage.

11. The liquid crystal display of claim 1, wherein:
the reference voltage discharger includes a discharge resistor electrically connected between the reference voltage line and a ground that has a ground voltage.

12. The liquid crystal display of claim 11, wherein
a resistance value of the discharge resistor is in a range of 13 kilohm to 1,000 kilohm.

13. The liquid crystal display of claim 1,
further comprising:
a pixel that includes a thin film transistor; and
a pixel voltage discharge circuit electrically connected to a thin film transistor for discharging potential charged in the pixel,
wherein the second electrode is electrically connected to the thin film transistor.

14. The liquid crystal display of claim 1, further comprising:
an insulating layer disposed between the first electrode and the second electrode.

15. The liquid crystal display of claim 14, wherein:
at least one of the first electrode and the second electrode includes a plurality of branch electrodes.

16. The liquid crystal display of claim 1, further comprising a second reference line configured to provide the reference voltage to the first electrode, wherein the reference voltage discharger includes a first discharge switching element or a first discharge resistor and a second discharge switching element or a second discharge resistor, the second discharge switching element or the second discharge resistor being electrically connected between the second reference voltage line and a ground that has a ground voltage.
